# EUROPEAN PATENT SPECIFICATION

(11) **EP 3 162 178 B1**
(45) Date of publication and mention of the grant of the patent: **17.04.2019**
(21) Application number: 16171533.9
(22) Date of filing: 26.05.2016
(51) Int. Cl.: A01B 59/06, A01B 63/112, B62D 49/08

(54) **VEHICLE COUNTERWEIGHT**
FAHRZEUGGEGENGEWICHT
CONTREPOIDS POUR VEHICULE

(30) Priority: 15.10.2015 GB 201518332
(43) Date of publication of application: 03.05.2017
(73) Proprietor: AGCO International GmbH, 8212 Neuhausen am Rheinfall (CH)
(72) Inventor: Freytag, Erich, 87616 Marktoberdorf (DE); MAIER, Thomas, 87616 Marktoberdorf (DE); HEISLER, Robert, 87616 Marktoberdorf (DE); NEUHAM, Manfred, 87616 Marktoberdorf (DE)
(74) Representative: AGCO Intellectual Property Department

(56) References cited:
- EP-A2- 0 182 229
- WO-A1-00/51613
- DE-A1- 3 223 990
- JP-U- H0 172 588
- JP-U- S6 289 296
- US-A- 3 479 049
- US-A1- 2003 222 447

## Description

This invention relates to a counter balance weight carried by agricultural machinery and vehicles, such as tractors.

The continuing trend for tractors to grow in size goes hand-in-hand with the increasing power of tractors. Technical advances have allowed the power of tractors to increase without a proportionate increase in overall weight. In some applications this is advantageous, for example where soil compression on fields and crops is to be avoided. However, in order to transmit the power of the tractor to the ground without excessive wheel slippage, it is known to provide counterweights on either the front and/or the rear of a tractor depending on the application.

It is known to use a three point hitch on the front of a tractor to attach a counterweight. Such an arrangement is, for example, shown in WO 2000/051613 where two lower arms of a three point hitch are connected to opposing sides of the weight and a top link is connectable to an attachment on the weight. The two lower arms are pivotable by hydraulic means to lift and lower the weight. The top link prevents undesired lateral movement of the weight.

Counterweights may weigh as much as 3300 Kg.

Problems exist when the tractor is not working in a field but still travelling, for example, when it is travelling along a road. In such a case the counterweight is not required to assist with weight distribution to prevent slippage, yet must still be carried by the tractor. Legislation restricts the load which may be carried by an axle of a vehicle or machine travelling on a road, as well as restricting the total weight of a vehicle, or machine using the road. An agricultural tractor can reach relatively high speeds on a road (upto 40 Km/h) and carrying a front counterweight can cause a tractor to be unstable due to the large weight borne by the suspended front axle.

JP H01 72588 disloses a working vehicle having wheel bearing axles and a counterweight, said counterweight comprising at least one wheel, a hydraulic cylinder associated with the counterweight to raise and lower the at least one wheel between a working and a non-working position in order to alter a load carried by one or both of the axles, and control means for the hydraulic cylinder to adjust the load carried by one or both axles of said machine.

It is an aim of the present invention to provide a solution which overcomes, or at least alleviates the aforementioned problems.

In accordance with the invention there is provided a self propelled agricultural machine comprising a chassis, load carrying front and rear axles and a counterweight, said counterweight comprising at least one wheel, a hydraulic cylinder associated with the counterweight to raise and lower the at least one wheel between a working and a non-working position in order to alter a load carried by one or both of the axles, and control means for the hydraulic cylinder to adjust the load carried by one or both axles of said machine characterised in that the machine further comprises means to determine the load on one or both of the axles and in that the control means is configured to raise and lower the at least one wheel by a pressure adjustment of the hydraulic cylinder associated with the counterweight to distribute a load from the machine axle or axles to the at least one wheel so that a predetermined safe load on the machine axle or axles is achieved.

Preferably, the means to determine the load on one or both of the axles comprises pressure sensors to detect a pressure in the hydraulic cylinder associated with the counterweight.

More preferably when an increase in the pressure in the hydraulic cylinder is detected, the control means acts to reduce the pressure in the hydraulic cylinder associated with the counterweight. Alternatively, or additionally, when a decrease in the pressure in the hydraulic cylinder is detected, the control means acts to increase the pressure in the hydraulic cylinder associated with the counterweight.

In this way, when travelling along a road, the at least one wheel of the counterweight can be brought into contact with the road and share the load of the counterweight with an axle of the vehicle or machine.

The counterweight may be attached to a three point linkage on the vehicle or machine in which case a hydraulic cylinder of the linkage may be used to raise and lower the counterweight together with the at least one wheel. Alternatively, the counterweight may be fixedly attached to the chassis of the vehicle or machine so that there is no relative movement between the chassis and the counterweight. In this case the at least one wheel is moveable relative to both the counterweight and the chassis.

More preferably, the vehicle control system receives an input from a driver to adjust the pressure in the hydraulic cylinder. In this way the driver can control the movement of the at least one wheel.

The counterweight may be provided with road safety attachments. For example, the counterweight may be provided with a bumper, or warning signs or lights to make travel on the road safer.

Preferably, the at least one wheel is moveably attached to the counterweight to rotate about a vertical axis. This allows the at least one wheel to turn and follow bends whilst moving.

The counterweight may be fixedly attachable to the vehicle or machine so that there is no movement of the counterweight relative to the vehicle or machine.

Preferably the at least one wheel is vertically extendible and retractable by means of the hydraulic cylinder.

More preferably, the hydraulic cylinder is located within said counterweight.

The counterweight may be attachable to a three point linkage on the vehicle or machine in which case the counterweight is lowered and raised relative to the vehicle or machine by a hydraulic cylinder of the three point linkage.

According to a further aspect of the invention, there is provided a self propelled agricultural machine having a counterweight, said counterweight comprising at least one wheel, said machine provided with control means to adjust a load carried by an axle of said machine and wherein a pressure adjustment of a hydraulic cylinder associated with the counterweight distributes a load from the machine axle to the at least one wheel so that a predetermined safe load on the machine axle is achieved.

The invention will now be described, by example only, with reference to the following drawings in which:
Figure 1 is a side view of a tractor provided with a counterweight in a non working position in accordance with the invention,
Figure 2 is a side view of the counter weight of figure 1 in a working position,
Figure 3 is a perspective view of figure 1, and
Figures 4a and 4b are side views of an alternative embodiment of the counterweight in accordance with the invention.

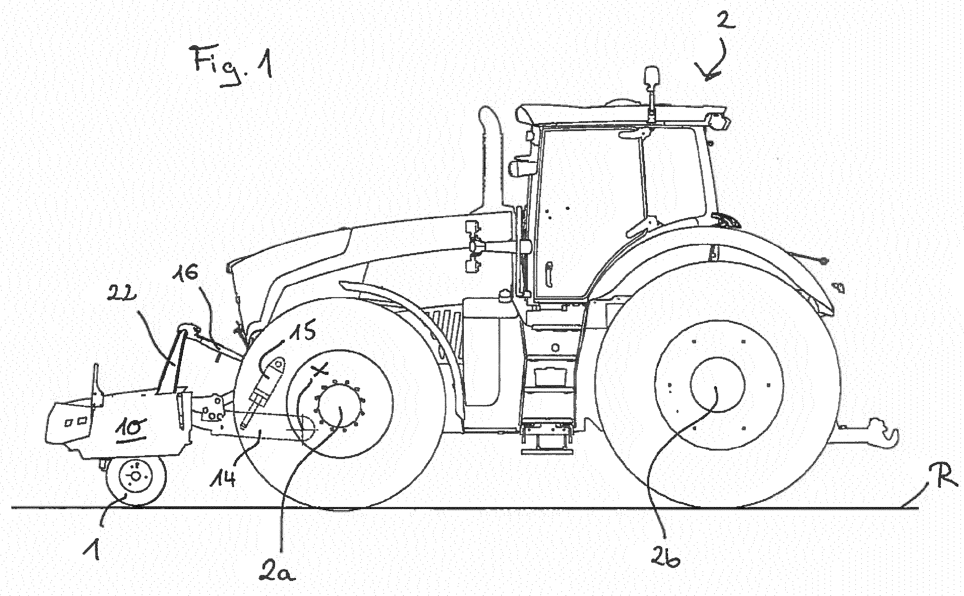

Figures 1 to 3 show a counterweight 10 mounted to the front end of a tractor chassis 12 of an agricultural tractor 2 by way of a three point linkage arrangement. Tractor 2 has front and rear axles 2a and 2b for supporting front and rear wheels respectively. The three point linkage arrangement consists of a pair of lower links 14 and a top link 16. The lower links 14 are pivotable about a horizontal axis X by hydraulic cylinders 15 which lift and lower the counterweight 10 and wheel 1 between a working position and a non working position. The top link 16 is connected to an upright post 22 mounted on the counterweight 10.

In accordance with the invention, the counterweight 10 is provided with at least one wheel 1.

In figure 1, the counterweight 10 and wheel 1 are in a non working position in which the tractor is travelling along a road R. In this position, the counterweight 10 is lowered so that the wheel 1 is in contact with the road R and supports some, or all of the weight of the counterweight 10. In this way, the overall weight of the tractor 2, including the weight of the counterweight 10 is carried by three axles (instead of the usual front and rear axles 2a, 2b only). Thus, the load carried by a single axle in this arrangement is less than if the overall weight of the tractor, including the counterweight was carried by two axles only.

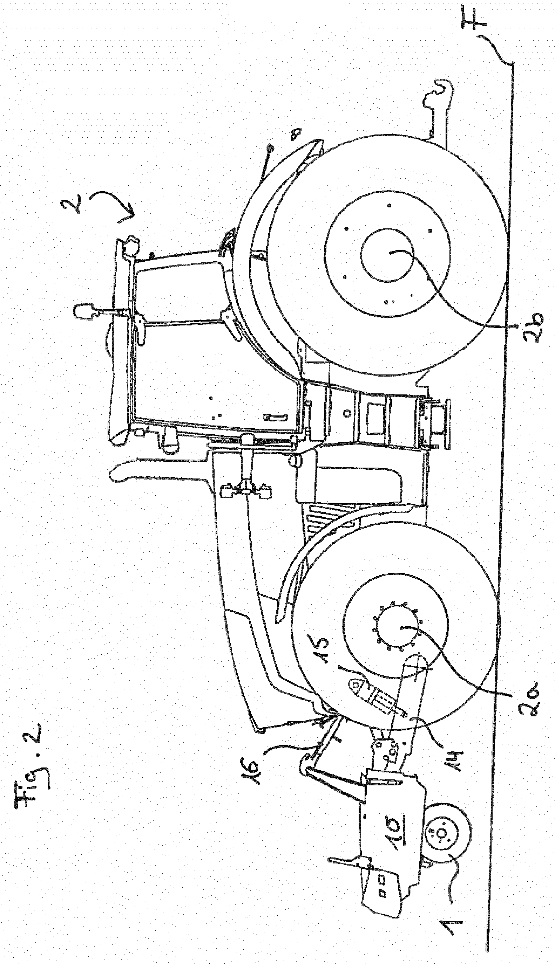

In figure 2, the counterweight 10 and wheel 1 are in a working position whilst working in a field F. in this position, the counterweight 10 is carried in a raised position such that the wheel 1 is not in contact with the ground of field F. In the working position, the counterweight 10 acts to assist with the distribution of the load over the front and rear axles 2a, 2b which prevents excessive wheel slippage whilst working in the field F.

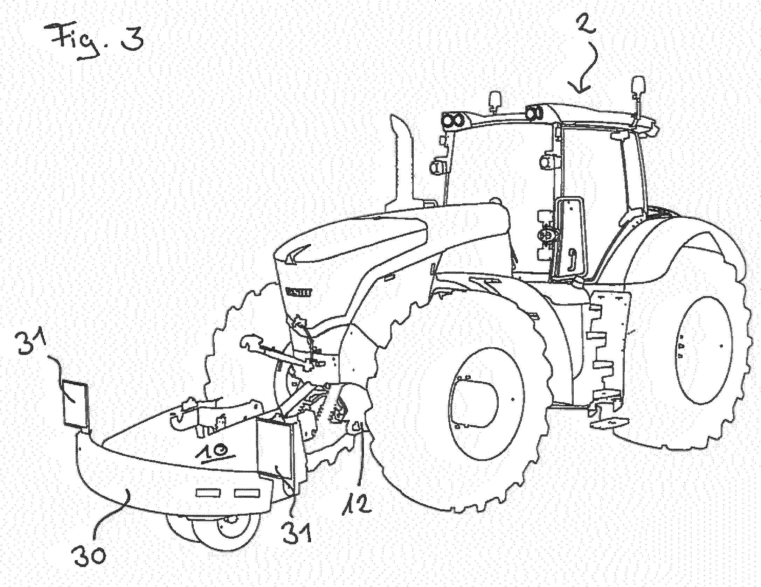

Figure 3 is a perspective view of the tractor from the front in which the counterweight 10 is in the non working position for travelling along a road. For clarity, upright post 22 has been omitted from the figure. Counterweight 10 is provided with a bumper 30 and warning signs 31 for safety on the road. The counterweight 10 could also be provided with other fittings, such as lights.

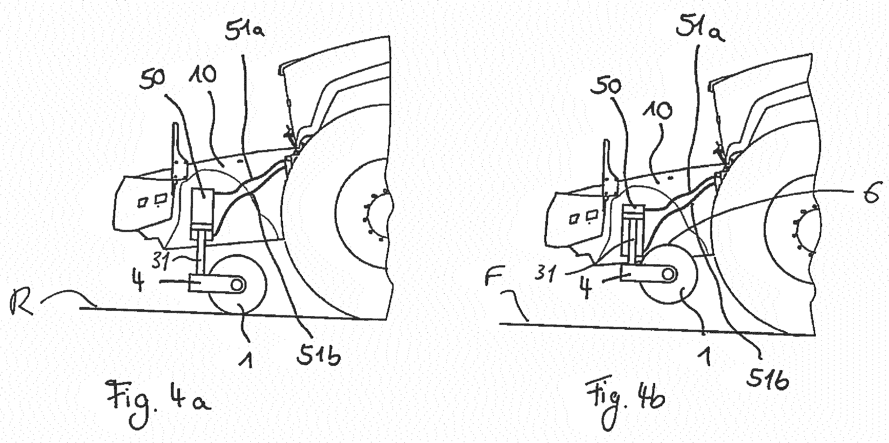

Figures 4a and 4b are cross sectional views showing an alternative embodiment of the counterweight 10 in accordance with the invention. In figures 4a and 4b, the counterweight 10 fixedly attached to chassis 12, so that it is not possible to move the counterweight relative to the tractor 2.

Figure 4a shows the wheel 1 in a non working position in which the wheel 1 is in contact with the road R. Figure 4b shows the wheel 1 in a working position in which the wheel 1 is not in contact with the ground of field F. The counterweight 10 is provided with wheel supporting elements 4 to provide a means for mounting one or more wheels thereto. The supporting elements 4 are connected perpendicular to the longitudinal axis of a rod 31 of hydraulic cylinder 50 located fully or partially within a recess of counterweight 10. As shown in figure 4a, when rod 31 is extended, it protrudes vertically from the counterweight towards the road R. Rod 31 may be fully retracted as shown in figure 4b so that it does not protrude from the counterweight. The hydraulic cylinder 50 is fluidly connected to the tractor fluid supply by lines 51a, 51b. Hydraulic cylinder 50 is used to raise and lower the wheel 1 between the working position and the non working positon. The underside of the counterweight 10 may be provided with a hollowed portion 6 to accommodate and protect part of the wheel when the wheel is in the working position, as shown in figure 4b. The supporting elements 4 may be pivotably attached to the rod 31 so that the elements 4 and wheel 1 can pivot about the longitudinal axis of rod 31. This allows the wheel 1 to move relative to the counterweight about a vertical axis and thus the wheel 1 can be turned to follow a curve whilst travelling. In an alternative arrangement, rod 31 may be attached to cylinder 50 so that it is rotatable about its longitudinal axis and supporting elements 4 fixedly attached to the rod 31.

The pressures in the hydraulic cylinders 15, 50 which move the lower links 14 or the supporting elements 4 respectively can be determined by pressure sensors in the cylinders. Pressure measurements made whilst the wheel is in the working position are indicative of the load which will be carried by the wheel 1 when the wheel is in the non working position. The pressure measurements made whilst the wheel 1 is in the working position therefore represents the load which will removed from the front and/or rear vehicle axles 2a, 2b when the wheel 1 is lowered into the non working position.

The position of the counterweight may be controlled by a control system on the tractor which is described below.

When the tractor is driven on a public road and a counterweight wheel control mode of the control system is activated by the driver.

The three point linkage or the supporting elements 4 are brought into a non working position in which the hydraulic cylinders 15, 50 are extended under a constant fluid flow so that the counterweight is lowered at a constant speed. The counterweight 10 is lowered until the wheel load indicated by the pressure in the hydraulic cylinder 15/50 falls below a pre determined value. Thereby, the system detects when the wheel 1 has come into contact with the road or ground.

When the wheel is in contact with the ground, the control system then switches to a pressure control mode which controls the suspension of the wheel 1 as follows:
- If wheel 1 travels over an elevation in the ground and is forced to move upwards, the pressure in the cylinder 15, 50 increases. This results in the three point linkage or wheel supporting elements 4 of figures 4a,4b being raised so that the force on wheel 1 is relieved.
- If the wheel 1 travels over a hollow in the ground and moves downwards, a pressure drop in the cylinders 15, 50 is detected. This results in the three point linkage or wheel supporting elements 4 of figure 4a/4b being lowered so that the wheel 1 still bears a load.

The driver may influence the functionality of the pressure control mode by adjusting the load ratio. For example, if the driver adjusts the control to a ratio of 60%, this means that 60% of the load provided by the counterweight 10 will be supported by the front axle 2a, and 40% will be supported by the wheel 1 attached to counterweight 10. Depending on the driver input, the pressure in the hydraulic cylinders 15, 50 can be regulated. The load ratio may be adjustable within a predetermined range of 10 to 70%.

The control system may be automatically deactivated if the counterweight wheel control system detects that the wheel is in a working position (for example, if a low vehicle speed is detected). This negates the risk of the counterweight wheel control system being automatically activated when a certain vehicle speed is later exceeded. In such a case, the driver may confirm the deactivation/activation of the counterweight wheel control system.

Alternatively, information concerning the loads carried by the front and rear axles 2a, 2b can be detected by other known methods and may be used by the control system to adjust the pressure in the hydraulic cylinders 15,50 to move the lower links 14 or the supporting elements 4 as described above. For example, the pressure in the hydraulic cylinders 15,50 may be increased until both vehicle axles 2a, 2b carry a load which is acceptable.

It is to be understood that the invention described herein is not limited to counterweights used on tractors only but is applicable to all counterweights used on a variety of agricultural vehicles and machinery, such as self-propelled harvesting machines including combine harvesters and forage harvesters. Further the invention is not limited to front weights and may be used for counterweights which are intended to be attached to the rear of a vehicle or machine such as those rear counterweights required by harvesting machines to balance the weight of a heavy harvesting header located at the front of the machine.

## Claims

1. A self propelled agricultural machine (2) comprising a chassis (12), load carrying front and rear axles (2a,2b) and a counterweight (10), said counterweight (10) comprising at least one wheel (1), a hydraulic cylinder (15; 50) associated with the counterweight (10) to raise and lower the at least one wheel (1) between a working and a non-working position in order to alter a load carried by one or both of the axles (2a,2b), and control means for the hydraulic cylinder (15;50) to adjust the load carried by one or both axles (2a, 2b) of said machine **characterised in that** the machine further comprises means to determine the load on one or both of the axles and **in that** the control means is configured to raise and lower the at least one wheel (1) by a pressure adjustment of the hydraulic cylinder (15; 50) associated with the counterweight (10) to distribute a load from the machine axle or axles (2a,2b) to the at least one wheel (1) so that a predetermined safe load on the machine axle or axles (2a,2b) is achieved.

2. A machine according to claim 1, **characterised in that** the means to determine the load on one or both of the axles (2a,2b) comprises pressure sensors to detect a pressure in the hydraulic cylinder (15;50) associated with the counterweight (10).

3. A machine according to claim 2, **characterised in that** when an increase in the pressure in the hydraulic cylinder (15;50) is detected, the control means acts to reduce the pressure in the hydraulic cylinder (15;50) associated with the counterweight (10).

4. A machine according to claim 2 or claim 3, **characterised in that** when a decrease in the pressure in the hydraulic cylinder (15;50) is detected, the control means acts to increase the pressure in the hydraulic cylinder (15;50) associated with the counterweight (10).

5. A machine according to claim 1, **characterised in that** the control means can receive an input from a driver to adjust the pressure in the hydraulic cylinder (15;50).

6. A machine as claimed in any preceding claim, **characterised in that** said counterweight (10) is provided with road safety attachments (30,31).

7. A machine as claimed in any preceding claim, **characterised in that** the at least one wheel (1) is moveably attached to the counterweight (10) to rotate about a vertical axis.

8. A machine as claimed in any preceding claim, **characterised in that** the counterweight (10) is fixedly attachable to the machine so that there is no movement of the counterweight (10) relative to the machine.

9. A machine as claimed in any preceding claim, **characterised in that** said at least one wheel (1) is vertically extendible and retractable by the hydraulic cylinder (50).

10. A machine as claimed in any preceding claim, **characterised in that** the hydraulic cylinder (50) is located within said counterweight (10).

11. A machine as claimed in any of claims 1 to 8, **characterised in that** the counterweight (10) is attachable to a three point linkage (14,16) on the machine and the hydraulic cylinder (15) forms part of the three point linkage (14,16), the counterweight (10) being moveable relative to the machine by the hydraulic cylinder (15).

## Patentansprüche

1. Selbstfahrende landwirtschaftliche Maschine (2), mit einem Chassis (12), einer lasttragenden Vorderachse (2a), einer lasttragenden Hinterachse (2b) und einem Gegengewicht (10), wobei das Gegengewicht (10) mindestens ein Rad (1), einen mit dem Gegengewicht (10) verbundenen Hydraulikzylinder (15; 50) zum Anheben und Absenken des mindestens einen Rads (1) zwischen einer Arbeitsstellung und einer Nicht-Arbeitsstellung, um eine durch eine oder beide Achsen (2a, 2b) getragene Last zu verändern, und ein Steuer/Regel-Mittel für den Hydraulikzylinder (15; 50) aufweist, um die durch eine oder beide Achsen (2a, 2b) der Maschine getragene Last einzustellen, **dadurch gekennzeichnet, dass**
die Maschine weiterhin ein Mittel zum Bestimmen der Last auf einer oder beiden Achsen (2a, 2b) aufweist, und dass das Steuer/Regel-Mittel ausgebildet ist, um das mindestens eine Rad (1) durch eine mit dem Gegengewicht (10) verbundene Druckeinstellung des Hydraulikzylinders (15; 50) anzuheben und abzusenken, um eine Last von der Achse oder den Achsen (2a, 2b) der Maschine auf das mindestens eine Rad (1) zu verlagern, sodass eine vorbestimmte sichere Last auf der Achse oder den Achsen (2a, 2b) der Maschine erreicht wird.

2. Maschine nach Anspruch 1, **dadurch gekennzeichnet, dass** das Mittel zum Bestimmen der Last auf einer oder beiden Achsen (2a, 2b) Drucksensoren zum Feststellen eines Drucks in dem mit dem Gegengewicht (10) verbundenen Hydraulikzylinder (15; 50) aufweist.

3. Maschine nach Anspruch 2, **dadurch gekennzeichnet, dass**, wenn ein Ansteigen des Drucks in dem Hydraulikzylinder (15; 50) festgestellt wird, das Steuer/Regel-Mittel zum Reduzieren des Drucks in dem mit dem Gegengewicht (10) verbundenen Hydraulikzylinder (15; 50) agiert.

4. Maschine nach Anspruch 2 oder 3, **dadurch gekennzeichnet, dass**, wenn ein Absinken des Drucks in dem Hydraulikzylinder (15; 50) festgestellt wird, dass Steuer/Regel-Mittel zum Erhöhen des Drucks in dem mit dem Gegengewicht (10) verbundenen Hydraulikzylinder (15; 50) agiert.

5. Maschine nach Anspruch 1, **dadurch gekennzeichnet, dass** das Steuer/Regel-Mittel eine Eingabe eines Fahrers empfangen kann, um den Druck in dem Hydraulikzylinder (15; 50) einzustellen.

6. Maschine nach einem der vorhergehenden Ansprüche, **dadurch gekennzeichnet, dass** das Gegengewicht (10) mit Straßensicherheitsbefestigungen (30, 31) versehen ist.

7. Maschine nach einem der vorhergehenden Ansprüche, **dadurch gekennzeichnet, dass** das mindestens eine Rad (1) so beweglich mit dem Gegengewicht (10) verbunden ist, dass es sich um eine vertikale Achse drehen kann.

8. Maschine nach einem der vorhergehenden Ansprüche, **dadurch gekennzeichnet, dass** das Gegengewicht (10) so fest mit der Maschine verbindbar ist, dass keine Bewegung des Gegengewichts (10) relativ zu der Maschine möglich ist.

9. Maschine nach einem der vorhergehenden Ansprüche, **dadurch gekennzeichnet, dass** das mindestens eine Rad (1) durch den Hydraulikzylinder (50) vertikal ausziehbar und zurückziehbar ist.

10. Maschine nach einem der vorhergehenden Ansprüche, **dadurch gekennzeichnet, dass** der Hydraulikzylinder (50) in dem Gegengewicht (10) angeordnet ist.

11. Maschine nach mindestens einem der Ansprüche 1 bis 8, **dadurch gekennzeichnet, dass** das Gegengewicht (10) mit einer Dreipunktaufhängung (14, 16) an der Maschine verbindbar ist und der Hydraulikzylinder (15) einen Teil der Dreipunktaufhängung (14, 16) bildet, wobei das Gegengewicht (10) durch den Hydraulikzylinder (15) relativ zu der Maschine bewegbar ist.

## Revendications

1. Machine agricole automotrice (2) comprenant un châssis (12), des essieux avant et arrière porteurs de charge(2a, 2b) et un contrepoids (10), ledit contrepoids (10) comprenant au moins une roue (1), un vérin hydraulique (15 ; 50) associé au contrepoids (10) afin de soulever et d'abaisser la ou les roues (1) entre des positions d'utilisation et de non utilisation afin de modifier une charge supportée par l'un des essieux (2a, 2b) ou les deux, et un moyen de commande du vérin hydraulique (15 ; 50) afin d'ajuster la charge supportée par l'un des essieux (2a, 2b) ou les deux de ladite machine, **caractérisée en ce que** la machine comprend, en outre, un moyen destiné à déterminer la charge sur l'un des essieux, ou les deux, et **en ce que** le moyen de commande est configuré de manière à soulever et à abaisser la ou les roues (1) par un réglage de pression du vérin hydraulique (15 ; 50) associé au contrepoids (10) afin de répartir une charge de l'essieu ou des essieux (2a, 2b) de la machine sur la ou les roues (1) de telle sorte qu'une charge sûre prédéterminée sur l'essieu ou les essieux (2a, 2b) de machine est obtenue.

2. Machine selon la revendication 1, **caractérisée en ce que** les moyens destinés à déterminer la charge sur l'un des essieux (2a, 2b) ou les deux, comprennent des capteurs de pression afin de détecter une pression dans le vérin hydraulique (15 ; 50) associé au contrepoids (10).

3. Machine selon la revendication 2, **caractérisée en ce que** lorsqu'une augmentation de la pression dans le vérin hydraulique (15 ; 50) est détectée, le moyen de commande agit afin de réduire la pression dans le vérin hydraulique (15 ; 50) associé au contrepoids (10).

4. Machine selon la revendication 2 ou 3, **caractérisée en ce que** lorsqu'une diminution de la pression dans le vérin hydraulique (15 ; 50) est détectée, le moyen de commande agit afin d'augmenter la pression dans le vérin hydraulique (15 ; 50) associé au contrepoids (10).

5. Machine selon la revendication 1, **caractérisée en ce que** le moyen de commande peut recevoir une entrée à partir d'un conducteur afin d'ajuster la pression dans le vérin hydraulique (15 ; 50).

6. Machine selon l'une quelconque des revendications précédentes, **caractérisée en ce que** ledit contrepoids (10) est équipé d'éléments de fixation de sécurité sur route (30, 31).

7. Machine selon l'une quelconque des revendications précédentes, **caractérisée en ce que** la ou les roues (1) sont fixées de manière à pouvoir être déplacées par rapport au contrepoids (10) afin de tourner autour d'un axe vertical.

8. Machine selon l'une quelconque des revendications précédentes, **caractérisée en ce que** le contrepoids (10) peut être fixé à demeure sur la machine de telle sorte qu'il n'existe aucun mouvement du contrepoids (10) par rapport à la machine.

9. Machine selon l'une quelconque des revendications précédentes, **caractérisée en ce que** la ou lesdites roues (1) peuvent être étendues ou rétractées verticalement par le vérin hydraulique (50).

10. Machine selon l'une quelconque des revendications précédentes, **caractérisée en ce que** le vérin hydraulique (50) est situé à l'intérieur dudit contrepoids (10).

11. Machine selon l'une quelconque des revendications 1 à 8, **caractérisée en ce que** le contrepoids (10) peut être fixé sur un élément de liaison en trois points (14,16) de la machine, et le vérin hydraulique (15) forme une partie de l'élément de liaison en trois points (14, 16), le contrepoids (10) pouvant être déplacé par rapport à la machine par le vérin hydraulique (15).
